# EUROPÄISCHE PATENTANMELDUNG

(11) **EP 1 820 601 A2**
(43) Veröffentlichungstag der Anmeldung: **22.08.2007**
(21) Anmeldenummer: 07003103.4
(22) Anmeldetag: 14.02.2007
(51) Int. Cl.: B23Q 1/70, F16J 15/44

(54) **Abdichtung für Hydrostatiklagerung**

(30) Priorität: 20.02.2006 DE 102006007736
(71) Anmelder: Werkzeugmaschinenfabrik Adolf Waldrich Coburg GmbH & Co. KG, 96450 Coburg (DE)
(72) Erfinder: Eckstein, Rolf, Dipl.-Ing., 96472 Rödental (DE)
(74) Vertreter: Hörschler, Wolfram Johannes

(57) **Zusammenfassung**

Die Erfindung bezieht sich auf eine Werkzeugspindel (26) für Bearbeitungszentren zur spanabhebenden Bearbeitung von Werkstücken. Die Werkzeugspindel (26) ist ausfahrbar in einem Spindelschlitten (16) gelagert. Die Werkzeugspindel (26) ist in einem Radial-Hydrostatiklager (70) aufgenommen. Das Radial-Hydrostatiklager (70) weist eine im Spindelschlitten (16) eingebaute Buchse (72) auf. Das Radial-Hydrostatiklager (70) ist an mindestens einer Seite in Rotationsrichtung und in Axialrichtung abgedichtet. Es ist eine Abdichtung (102) vorgesehen, die eine reibungsarm gelagerte Axialabdichtung (106) umfasst druckluftbeaufschlagt gelagert ist und mit der Werkzugspindel (26) mitrotiert.

## Beschreibung

Die Erfindung bezieht sich auf eine Abdichtung einer radialen Hydrostatiklagerung für Werkzeugmaschinen, insbesondere zur Lagerung einer verfahrbaren Werkzeugspindel in einem Spindelschlitten.

### Stand der Technik

Aus der Firmenbroschüre Union Bohr- und Fräsmaschinen und Bearbeitungszentrum der Baugröße 100/110 in Tischausführung der Union Werkzeugmaschinen GmbH Chemnitz, Clemens-Winkler-Straße 5, D-09116 Chemnitz, Prospektcodierung T-DC 10-11-9d, geht ein Spindelstock mit der Hauptlagerung der Spindel hervor. Gemäß dieser Lösung ist auf der Spindel, die am Frontende eine Werkzeugaufnahme aufweist, eine Hülse gelagert. Die Hülse ist in einem Mantel mittels Wälzlagern angeordnet, wobei der die Spindel und die Hülse aufnehmende Mantel über einen Riemenantrieb angetrieben wird. Dazu ist ein Axialabschnitt des Mantels als Riemenscheibe ausgelegt, um den drei Riemen umlaufen. Die Riemen werden durch einen oberhalb der Bohrspindel in einem oberhalb des Spindelschlittens angeordneten Gehäuseteil aufgenommenen Antrieb angetrieben. Wie aus der Zeichnung "Hauptlagerung" der zitierten Firmenbroschüre der Union Werkzeugmaschinen GmbH hervorgeht, ist die Hülse, in welcher die Wergzeugspindel geführt ist, mittels Wälzlagern im Spindelschlitten, der in axiale Richtung verfahrbar ist, gelagert. Der Spalt zwischen Hülse und Bohrspindel liegt in der Größenordnung zwischen 0,008 und 0,015 mm. Bei einem "Anfahren" der in der Firmenbroschüre offenbarten Werkzeugspindel an das spanabhebend zu bearbeitende Werkstück kann ein Auswechseln einer beschädigten Werkzeugspindel erforderlich sein, was mit einer Umrüstzeit von mehreren Tagen einhergeht.

Aus DE 28 45 968 A1 bzw. DD 201 818 geht eine Anordnung von Funktionselementen einer Arbeitsspindel, insbesondere für eine Koordinatenbohrmaschine, hervor. Gemäß dieser Lösung wird eine Arbeitsspindel offenbart, die insbesondere bei Koordinatenbohrmaschinen eingesetzt wird, die zur Realisierung hochgenauer rotatorischer und translatorischer Bewegungen in mindestens zwei im Gehäuse angeordneten hydrostatischen Mehrtaschenlagern oder in anderer Weise ausgebildeten Lagern drehbar und axial verschiebbar gelagert und geführt ist. Zur Übertragung der Rotations- und Translationsbewegung auf eine hohle Arbeitsspindel werden Funktionselemente eingesetzt. Diese umfassen eine Hohlwelle, eine Gewindehohlspindel sowie eine unverschiebbare Stange, die in die hohle Arbeitsspindel hineinragend angeordnet sind. Die Übertragung der Rotationsbewegung durch die teleskopartig in die hohle Arbeitsspindel hineinragende Hohlwelle erfolgt über Formschluss auf die hohle Arbeitsspindel. Die mit dem Hauptantrieb in Verbindung stehende Hohlwelle ist drehbar, jedoch axial unverschiebbar im Gehäuse gelagert. Die Übertragung der Translationsbewegung erfolgt durch die teleskopartig in die Hohlwelle hineinragende Gewindehohlspindel auf die hohle Arbeitsspindel. Das spindelkopfseitige Ende der Gewindehohlspindel ist über eine Axiallagerung drehbar, jedoch axial unverschiebbar mit der hohlen Arbeitsspindel verbunden. Der antriebsseitige Teil der Gewindehohlspindel greift in eine mit einem Nebenantrieb in Verbindung stehende, gehäusedrehbare, jedoch axial unverschiebbar gelagerte Mutter ein. Die Gewindehohlspindel selbst ist durch die wiederum teleskopartig in diese hineinragende, dem Gehäuse drehfest und unverschiebbar verbundene Stange über Formschluss gegen Verdrehung gesichert und axial verschiebbar geführt. Gemäß der aus DE 28 45 968 A1 bekannten Lösung wird das Drehmoment des Hauptantriebs durch eine Hohlwelle übertragen, während die Vorschubkraft des Nebenantriebs über eine Gewindehohlspindel übertragen wird. Die hohle Arbeitsspindel gemäß dieser Lösung ist durch zwei im Gehäuse angeordnete, hydrostatische Mehrtaschenlager drehbar und axial verschiebbar gelagert und geführt. Die hydrostatischen Mehrtaschenlager werden über ein Versorgungssystem mit Druckmittel gespeist. Von Nachteil bei der aus DE 28 45 968 A1 bzw. DD 201 818 hervorgehenden Lösung ist der Umstand, dass das dem Werkstück zuweisende Ende der Werkzeugspindel nicht abgedichtet ist und demzufolge das im vorderen Mehrtaschenlager zum Aufbau des Druckmittelpolsters erforderliche Ölvolumen über den dem spanabhebend zu bearbeitenden Werkstück zuweisenden Spalt an der Stirnseite der Werkzeugspindel austreten kann. Einerseits bedingt diese konstante Leckage ein erhöhtes Druckniveau im Druckmittelversorgungssystem des im Werkstück zuweisenden hydrostatischen Mehrtaschenlagers, andererseits stellt sich über die Betriebszeit gesehen ein konstanter Druckmittelleckageverlust ein. Ferner weist die aus DE 28 45 968 A1 bzw. DD 201 818 hervorgehende Lösung den Nachteil eines geringen Ausfahrweges auf, aufgrund des Riementriebs stellt sich im Laufe der Betriebszeit Spiel in der Kraftübertragung auf die Bohrspindel ein und die Verdrehsteifigkeit der Bohrspindel ändert sich mit dem Ausfahrweg in die Bearbeitungsgüte beeinträchtigender Weise.

### Darstellung der Erfindung

Angesichts der aus dem Stand der Technik bekannten Lösung liegt der vorliegenden Erfindung die Aufgabe zugrunde, eine Abdichtung eines Radial-Hydrostatiklagers für eine Werkzeugspindel, die in einem Bearbeitungszentrum Verwendung findet, bereitzustellen.

Erfindungsgemäß wird die Aufgabe durch die Merkmale des Patentanspruchs 1 gelöst.

Die erfindungsgemäß vorgeschlagene Abdichtung eines Radial-Hydrostatiklagers zur Lagerung der Werkzeugspindel am werkstückseitigen Ende zeichnet sich dadurch aus, dass über dessen Axiallänge eine Anzahl von mit Druckmittel versorgten taschenförmigen Ausnehmungen ausgebildet ist, wobei die taschenförmigen Ausnehmungen abgedichtet sind. Die Axialerstreckung der Taschen ermöglicht einerseits den Aufbau eines relativ breiten Druckpolsters und begrenzt andererseits den Spalt. Der bei Hydrostatiklagern unvermeidliche Abstand zwischen dem feststehenden Teil des Radial-Hydrostatiklagers, welcher durch eine die Werkzeugspindel umgebende Buchse gebildet wird, und der andererseits durch die Außenumfangsfläche der Werkzeugspindel bestimmt wird, kann minimal gehalten werden. Durch den extrem geringen Spalt ergibt sich eine spielfreie Radiallagerung und eine hochgenaue Längsführung. In einer bevorzugten Ausführungsvariante werden die Taschen des Radial-Hydrostatiklagers an ihrer der Mantelfläche der Werkzeugspindel zuweisenden Seite angeschrägt ausgeführt. Durch die angeschrägte Ausführung ist eine rasche Auswechselbarkeit der Werkzeugspindel nach dem Auftreten eines "Anfahrereignisses", d.h. nach einer unbeabsichtigten Kollision der Werkzeugspindel mit dem spanabhebend zu bearbeiten Werkstück möglich. Die leichte Auswechselbarkeit ist einerseits durch die angeschrägten Bereiche des Taschenteils des Radial-Hydrostatiklagers möglich und wird andererseits dadurch begünstigt, dass die Werkzeugspindel mit einer schnell montier- und demontierbaren Überlastsicherung mit einem Getriebe verbunden ist, durch welches die Werkzeugspindel und das daran aufgenommene spanabhebende Werkzeug bzw. das mit dem Spindelschlitten verbundene Aggregat gekoppelt sind.

Das erfindungsgemäß vorgeschlagene abgedichtete Radial-Hydrostatiklager der Werkzeugspindel in einem entweder horizontal oder auch in vertikaler Richtung verfahrbaren Spindelschlitten zeichnet sich durch eine Abdichtung mindestens am werkzeugseitigen Ende des Spindelschlittens aus. Dazu ist die Abdichtung in eine Radialabdichtung und eine Axialabdichtung geteilt ausgebildet. Während die Radialabdichtung durch einen die Mantelfläche der Werkzeugspindel umgebenden Dichtring gebildet wird, erfolgt die Axialabdichtung der Werkzeugspindel im Bereich der stirnseitigen Werkzeugaufnahme durch einen vorzugsweise pneumatisch gelagerten Ring, der an seiner der Mantelfläche der Werkzeugspindel zuweisenden Seite mindestens zwei Dichtelemente aufweist und der bei der Rotation der Werkzeugspindel relativ zu seiner Pneumatiklagerung mitrotiert. Dadurch lässt sich die Verlustleistung aufgrund der Lagerreibung im Vergleich zu bisher aus dem Stand der Technik bekannten Lösungen signifikant herabsetzen. Die Axialabdichtung bewegt sich relativ zum Pneumatiklager mit minimaler Reibung und wird durch die Rotation der Werkzeugspindel relativ zum Pneumatiklager bewegt. Eine Relativbewegung zwischen den auf der Umfangsfläche der Werkzeugspindel anliegenden Dichtelementen und der Umfangsfläche der Werkzeugspindel unterbleibt. Der die Dichtelemente aufweisende Ring wird vorzugsweise pneumatisch fixiert und überdeckt die Mantelfläche der Werkzeugspindel über einen Axialbereich und entfaltet somit eine flächige Abdichtwirkung. Zudem ist ein Zurückhalten des aus dem Radial-Hydrostatiklager unvermeidlich austretenden Druckmittelvorrats durch zwei in Vorschubrichtung der axial aus dem Spindelschlitten ausfahrbaren Werkzeugspindel in Reihe hintereinander geschaltete Dichtelemente möglich.

Die leichte Auswechselbarkeit der Werkzeugspindel, die verfahrbar im Spindelschlitten aufgenommen ist, wird dadurch erreicht, dass die den stationären Taschenteil des Radial-Hydrostatiklagers bildende Buchse nach der Demontage der Bearbeitungsplatte an der Stirnseite des Spindelschlittens aus dem Inneren des Spindelschlittens herausgezogen werden kann. Dazu ist lediglich die Überlastsicherung zwischen dem Abtrieb des die Werkzeugspindel rotatorisch antreibenden Getriebes und der Werkzeugspindel selbst zu lösen. Im Vergleich zu bisher bekannten Lösungen, bei denen das Auswechseln der Werkzeugspindel mehrere Tage in Anspruch nimmt, kann dies bei Einsatz der erfindungsgemäßen Lösung in einem erheblich kürzeren Zeitraum erfolgen, so z.B. innerhalb eines Tages.

In vorteilhafter Weise wirkt sich die im Betrieb einstellende Erwärmung durch den Zerspanvorgang am Werkzeug der Werkzeugspindel nicht auf die Funktion der Führung, d.h. auf den Spalt innerhalb des Radial-Hydrostatiklagers aus. Eine sich im Laufe des Betriebs einstellende Wärmeausdehnung der Werkzeugspindel, d.h. eine Durchmesservergrößerung der Werkzeugspindel wird durch den Spalt des Hydrostatiklagers aufgenommen. Die sich im Betrieb einstellende, unvermeidliche Erwärmung der Werkzeugspindel wird durch die erfindungsgemäß vorgeschlagene Abdichtung des Hydrostatiklagers an mindestens einem Ende dadurch entscheidend herabgesetzt, dass die Verlustleistung aufgrund der Reibung durch den Einsatz einer Pneumatiklagerung zumindest an der Axialabdichtung entscheidend reduziert werden kann. Wie oben bereits dargelegt, befinden sich die Dichtelemente der Axialabdichtung stationär auf dem Umfang der Werkzeugspindel; der die Dichtelemente aufnehmende Ring der Axialabdichtung rotiert mithin mit der Werkzeugspindel, jedoch relativ zu der im Gehäuse aufgenommenen Pneumatiklagerung, wodurch die Verlustleistung signifikant herabgesetzt wird.

### Zeichnung

Anhand der Zeichnung wird die Erfindung nachstehend eingehender beschrieben.

Es zeigt:
- Figur 1: eine Seitenansicht eines an einem Bearbeitungszentrum verfahrbaren Schlittens, an dem ein die Werkzeugspindel aufnehmender Spindelschlitten ausgebildet ist,
- Figur 2: einen Schnitt durch das dem spanabhebend zu bearbeitenden Werkstück zuweisende Ende des Spindelschlittens mit darin aufgenommener in einer Buchse durch ein Radial-Hydrostatiklager gelagerter Werkzeugspindel,
- Figur 3: eine vergrößerte Darstellung der Taschenausführung innerhalb des Radial-Hydrostatiklagers,
- Figur 4: eine schematische Darstellung der Abdichtung des Radial-Hydrostatiklagers an der Werkzeugspindel und
- Figur 5: eine Darstellung des Radial-Hydrostatiklagers und der Abdichtung in Axial- und Radialrichtung.

### Ausführungsvarianten

Das erfindungsgemäß vorgeschlagene Radial-Hydrostatiklager wird nachfolgend im Zusammenhang mit einem in Horizontalrichtung verfahrbaren Spindelschlitten, der an einem weiteren Schlitten aufgenommen ist, beschrieben. Es ist unerheblich, ob der weitere Schlitten ebenfalls in horizontale oder auch in vertikale Richtung verfahrbar an einem spanabhebend zu bearbeitende Werkstücke bearbeitenden Bearbeitungszentrum aufgenommen ist. Unter Radial-Hydrostatiklager wird nachfolgend die bauliche Einheit, eine Buchse 72, erstes Einsatzteil 88 und ein zweites Einsatzteil 90 umfassend, verstanden.

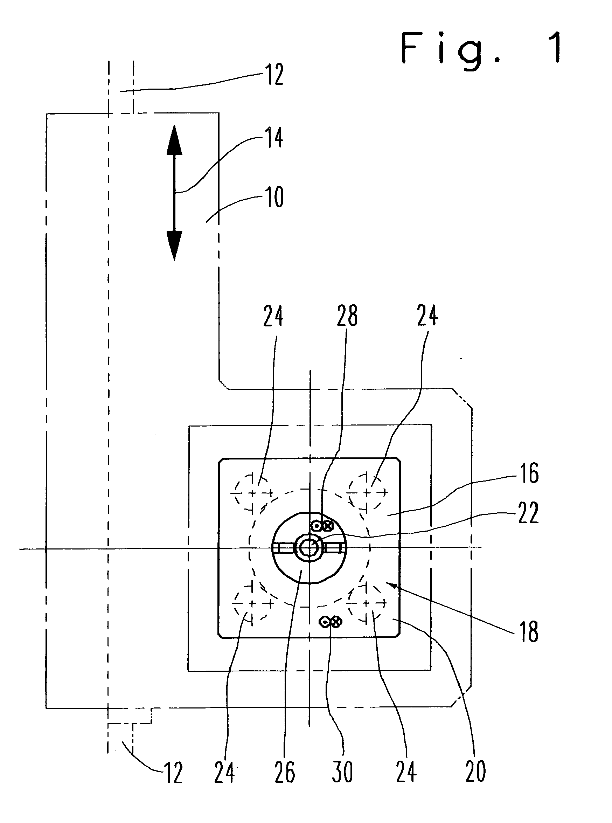

Der Darstellung gemäß Figur 1 ist eine Seitenansicht eines Vertikal-/Horizontal-Schlittens 10 zu entnehmen. Der Vertikal-/Horizontal-Schlitten 10 ist entlang einer Vertikalführung 12, um ein Beispiel zu nennen, bewegbar. Bei der Vertikalführung 12 kann es sich um eine hydrostatische Führung oder um eine Wälzführung, eine Gleitführung, eine Linearführung oder eine Schwalbenschwanz-Führung handeln, um eine hochgenaue Positionierung des Vertikal-/Horizontal-Schlittens 10 relativ zum spanabhebend zu bearbeitenden Werkstück zu erreichen. Im Vertikal-/Horizontal-Schlitten 10 ist ein Spindelschlitten 16 verfahrbar aufgenommen. Der Spindelschlitten 16 führt z.B. eine durch Bezugszeichen 30 gekennzeichnete, senkrecht zur Zeichenebene gemäß der Figur 1 verlaufende HorizontalVerfahrbewegung aus. Die Stirnseite des Spindelschlittens 16 ist durch Bezugszeichen 18 bezeichnet. An der Stirnseite 18 kann eine Anschlussfläche 20 für ein Aggregat aufgenommen werden, an welche ein die Funktionalität des Werkzeugspindelschlittens 16 erweiterndes Aggregat angeschlossen wird. Die Befestigungen für ein in Figur 1 nicht dargestelltes Aggregat sind durch Bezugszeichen 24 gekennzeichnet. In der Anschlussfläche 20 münden Medienleitungen, über welche dem optional an der Stirnseite 18 zu befestigenden Aggregat zur Funktionserweiterung des Spindelschlittens 16 Medien wie z.B. Hydraulik oder Signalleitungen für Sensorik und elektrische Energie zugeführt werden können. Im Spindelschlitten 16 ist eine ebenfalls in Horizontalrichtung verfahrbare Werkzeugspindel 26 aufgenommen. Die Werkzeugspindel 26 umfasst eine Werkzeugaufnahme 22 und führt ebenfalls eine horizontale Verfahrbewegung aus, angedeutet durch Bezugszeichen 28 in Figur 1.

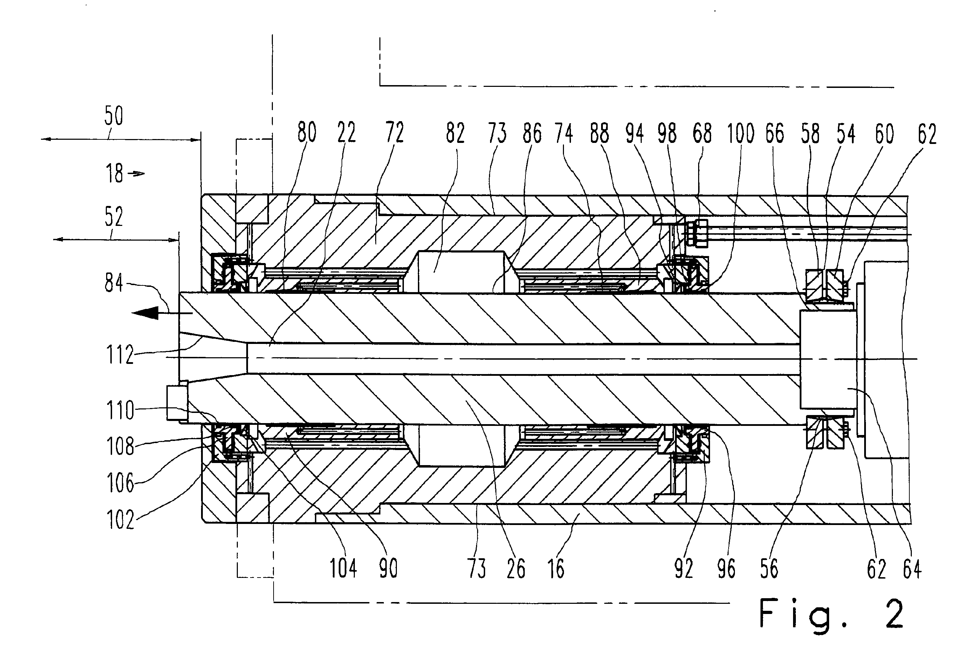

Figur 2 zeigt einen Schnitt durch das werkstückseitige Ende des Spindelschlittens 16, in dem eine relativ am Spindelschlitten 16 verfahrbare Werkzeugspindel 26 in einem erfindungsgemäß abgedichteten Radial-Hydrostatiklager 70 gelagert und geführt ist.

Figur 2 zeigt, dass der Spindelschlitten 16 entlang eines sich in horizontale Richtung erstreckenden Verfahrwegs 50 von z.B. 1500 mm verfahren werden kann. Relativ zum Spindelschlitten 16 ist die Werkzeugspindel 26 um den sich ebenfalls in horizontale Richtung erstreckenden Verfahrweg 52 bewegbar. Die Stirnseite des Spindelschlittens 16 ist durch Bezugszeichen 18 bezeichnet, während die Stirnseite der aus dem Spindelschlitten 16 ausfahrbaren Werkzeugspindel 26 durch Bezugszeichen 118 bezeichnet ist.

Wie aus der Darstellung gemäß Figur 2 hervorgeht, ist die Werkzeugspindel 26 mittels einer gestrichelt angedeuteten Überlastsicherung 54 mit einem Abtrieb 64 eines in Figur 2 nicht dargestellten Getriebes verbunden, über welches die Drehbewegung eines Antriebs an eine ein Werkzeug oder ein Aggregat aufnehmende Werkzeugspindel 26 übertragen wird. Aus zeichnerischen Gründen ist die Werkzeugspindel 26 nicht in ihrer vollen Länge dargestellt, so dass auch die Position der Überlastsicherung 54 nicht der wahren Position der Überlastsicherung im Betrieb entspricht.

Die Überlastsicherung 54 umfasst einen Schrumpfsitz 66, über den die Werkzeugspindel 26 mit dem Abtrieb 64 des Getriebes verbunden ist. Am Umfang 86 der Werkzeugspindel 26 befindet sich ein Ring 56, dessen Außenumfangsfläche bevorzugt angeschrägt ausgebildet ist. Auf der Außenumfangsfläche des Rings 56 sind ein erster Spannring 58 sowie ein zweiter Spannring 60 aufgenommen, welche über mehrere Vorspannelemente 62 in axialer Richtung miteinander verspannt sind. Durch diese Lösung kann an der Überlastsicherung 54 ein definiertes sich aus der Vorspannkraft und aus der Flächenpressung am Schrumpfsitz 66 ergebendes Durchrutschmoment eingestellt werden, bei dessen Überschreiten die Werkzeugspindel 26 relativ zum Abtrieb 64 durchrutscht, so dass Spindel und Antrieb keinen Schaden nehmen.

Aus der Darstellung gemäß Figur 2 geht ferner hervor, dass die Werkzeugspindel 26 in einem abgedichteten Radial-Hydrostatiklager 70 gelagert ist. Das abgedichtete Radial-Hydrostatiklager 70 umfasst eine Buchse 72. Die Buchse 72 ihrerseits umschließt ein erstes Einsatzteil 88 und ein zweites Einsatzteil 90. Im ersten Einsatzteil 88 der Buchse 72 ist mindestens eine Tasche 74 ausgebildet. Die Tasche 74 wird über eine Druckmittelversorgung 68 mit einem Druckmittel z.B. Öl beaufschlagt. Mit dem Druckmittel erfolgt der Aufbau eines Druckpolsters in der mindestens einen Tasche 74. Die Buchse 72 umschließt ferner ein zweites Einsatzteil 90, in dem mindestens eine Tasche 80 aufgenommenen ist. Die Druckmittelversorgung 68 der in den Einsatzteilen 88 und 90 ausgebildeten druckmittelbevorratenden Taschen 74 und 80 kann beispielsweise über einen in der Buchse 72 ausgebildeten Hohlraum 82 erfolgen, in welchen die erwähnte Druckmittelversorgung 68 mündet.

Das abgedichtete Radial-Hydrostatiklager 70 gemäß der Schnittdarstellung in Figur 2 ist so ausgelegt, dass eine im Wesentlichen spielfreie Führung der Werkzeugspindel 26 in diesem erreicht wird. Zwischen den Taschenkanten der Taschen 74 und 80 und dem Umfang 86 der Werkzeugspindel 26 liegt ein extrem geringer Spalt vor. Aufgrund dieses Spalts und der besonderen Konfiguration der Taschenkanten, lässt sich im Falle eines "Anfahrereignisses", d.h. einer Kollision der Werkzeugspindel 26 mit dem spanabhebend zu bearbeitenden Werkstück das eventuell erforderliche Auswechseln der Werkzeugspindel 26 mit geringer Rüstzeit erreichen. Zum Auswechseln der Werkzeugspindel 26 ist nach einem Lösen der Überlastsicherung 54 zunächst die Demontage einer eventuell an der Stirnseite 18 der Werkzeugspindel 26 vorgesehenen Anschlussfläche 20 für ein Aggregat erforderlich. Anschießend kann die Buchse 72 aus dem in horizontale Richtung verfahrbaren Spindelschlitten 16 gezogen werden.

Durch die erfindungsgemäß vorgeschlagene Abdichtung des Hydrostatiklagers der Werkzeugspindel 26 wird deren hochgenaue Führung in dem Bereich erreicht, in dem bei der Bearbeitung von spanabhebend zu bearbeitenden Werkstücken durch das Werkzeug die höchsten Radialkräfte auf die angetriebene Werkzeugspindel 26 einwirken.

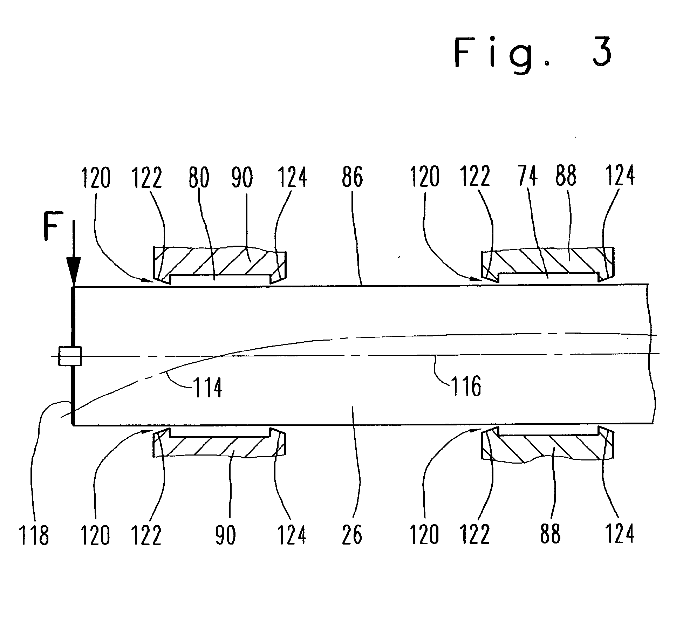

Aus der Darstellung gemäß Figur 2 lässt sich des Weiteren entnehmen, dass das Radial-Hydrostatiklager 70 in der Buchse 72 durch eine erste Abdichtung 92 und eine zweite Abdichtung 102 an dem der Überlastsicherung 54 zuweisenden Ende und an dem der Stirnseite 18 des Spindelschlittens 16 zuweisenden Ende abgedichtet ist. Die erste Dichtung 92, die in axiale Richtung hinter dem ersten Einsatzteil 88 aufgenommen ist, umfasst eine erste Radialdichtung 94 sowie eine erste Axialdichtung 96. Während die erste Radialdichtung 94 z.B. als ein Dichtring ausgebildet sein kann, wird die erste Axialdichtung 96 durch ein ringförmiges Bauteil gebildet, in welches ein erstes Dichtelement 98 und ein zweites Dichtelement 100 eingelassen sind. Die genannten ersten und zweiten Dichtelemente 98, 102 liegen auf dem Umfang 86 der Werkzeugspindel 26 auf und streifen beim Verfahren der Werkzeugspindel 26 in Horizontal-Richtung 52 relativ zum Spindelschlitten 16 das Druckmittel ab. Im Bereich der Stirnseite 18 ist das zweite Einsatzteil 90, in dem die Tasche 80 ausgebildet sind, ebenfalls durch die zweite Abdichtung 102 abgedichtet. Die zweite Abdichtung 102 umfasst eine zweite Radialdichtung 104, die bevorzugt ebenfalls als Dichtring ausgebildet ist. Ferner umfasst die zweite Abdichtung 102 eine zweite Axialdichtung 106, in die ein drittes Dichtelement 108 und ein viertes Dichtelement 110 eingelassen sind. Durch die zweite Abdichtung 102 im Bereich der Stirnseite 18 des Spindelschlittens 16 kann in vorteilhafter Weise ein Austritt von Druckmittel aus den Taschen 74, 80 des Radial-Hydrostatiklagers 70 an der dem Werkstück zuweisenden Stirnseite 18 vermieden werden. In Figur 3 ist eine Pneumatiklagerung 126 gezeigt, die die Verlustleistung durch Reibung bei der Rotation der Werkzeugspindel hinsichtlich der Abdichtung signifikant reduziert.

Der Vollständigkeit halber sei erwähnt, dass der in die Werkzeugspindel 26 eingelassenen Werkzeugaufnahme 22 ein Konus 112 zugeordnet ist.

Figur 3 zeigt die Konfiguration der Druckmitteltaschen des Radial-Hydrostatiklagers 70 gemäß Figur 2.

Aus der in schematischer Weise dargestellten Figur 3 ist entnehmbar, dass die in dem ersten Einsatzteil 88 und dem zweiten Einsatzteil 90 jeweils ausgebildeten Taschen 74, 80 - hier vereinfacht dargestellt - durch Taschenanschrägungen 120 begrenzt sind. Die an Taschenstegen ausgebildeten Taschenanschrägungen 120 sind an einer Seite in einer ersten Schrägung 122 ausgebildet und an der anderen Seite einer zweiten Schrägung 124. Der Darstellung gemäß Figur 3 ist überdies entnehmbar, dass zwischen der höchsten Erhebung der Taschenstege an dem ersten Einsatzteil 88 und dem zweiten Einsatzteil 90 sich zwischen diesen und dem Umfang 86 der Werkzeugspindel 26 ein Spalt 125 einstellt. Dieser Spalt 125 ist extrem gering. Auf beiden Seiten des Umfangs 86 addiert sich das Spaltmaß im Radial-Hydrostatiklager 70.

Die Werkzeugspindel 26 weist eine Symmetrielinie 116 auf, im Falle einer Belastung an der Stirnseite 118 der Werkzeugspindel 26, die z.B. bei der Bearbeitung eines spanabhebend zu bearbeitenden Werkstücks auftritt, verformt sich die Werkzeugspindel 26 entsprechend der Bezugszeichen 114 identifizierten Biegelinie gemäß Figur 3.

Durch die mit Taschenanschrägungen 120 versehenen Taschenstege, welche die Taschen 74, 80 im ersten Einsatzteil 88 und im zweiten Einsatzteil 90 begrenzen, wird in vorteilhafter Weise erreicht, dass nach Demontage der Arbeitsfläche 20 im Anschluss eines Aggregats von der Stirnseite 118 der Werkzeugspindel 26 bzw. von der Stirnseite 18 des Spindelschlittens 16, ein Ziehen der Buchse 72 in Ziehrichtung 84 aus ihrer Anlagefläche 73 an der Innenseite des Spindelschlittens 16 erfolgen kann. Dadurch ist ein im Vergleich zu bekannten Lösungen aus dem Stand der Technik sehr schnell durchführbares Auswechseln einer schadhaften Werkzeugspindel 26 aus dem Spindelschlitten 16 möglich.

Aufgrund der Auslegung des Radial-Hydrostatiklagers 70 mit mindestens zwei Taschen 74, 80 kann ein sehr langer Axialführungsbereich, der höchsten Bearbeitungskräften F ausgesetzten Werkzeugspindel 26 erreicht werden, was hochgenaue Bearbeitungsgenauigkeiten nicht zuletzt aufgrund des geringen Hydrostatikspalt des Radial-Hydrostatiklagers 70 ermöglicht.

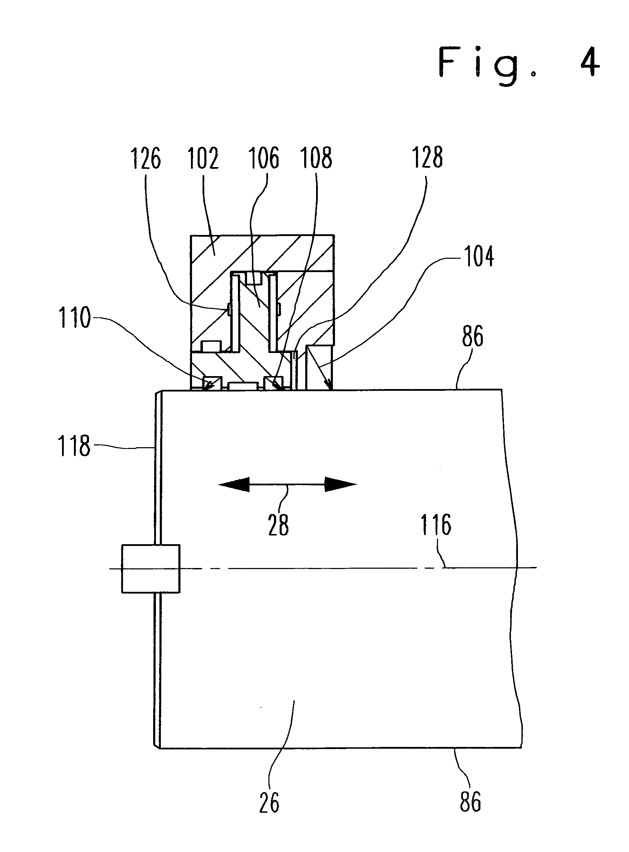

Aus der Darstellung gemäß Figur 4 geht in schematischer Ansicht jedoch in vergrößertem Maßstab eine der Abdichtungen des Radial-Hydrostatiklagers 70 und der von diesem umschlossenen Werkzeugspindel 26 hervor.

Aus der Darstellung gemäß Figur 4 ergibt sich, dass die zweite Abdichtung 102 die zweite Axialabdichtung 106 umfasst. Die zweite Axialabdichtung 106 ist im Wesentlichen ringförmig ausgebildet und mittels einer Pneumatiklagerung 126 in Axialrichtung fixiert. Die zweite Axialabdichtung 106 ist mit dem Umfang 86 der Werkzeugspindel 26 zuweisenden Bereich in axiale Richtung verlängert ausgebildet und umschließt einen Ring sowie das dritte Dichtelement 108 und das vierte Dichtelement 110. In Richtung der HorizontalVerfahrbewegung 28 der Werkzeugspindel 26 liegt das dritte Dichtelement 108 vor dem vierten Dichtelement 110. Beide Dichtelemente 108 und 110 kontaktieren den Umfang 86 der Werkzeugspindel 26. Der zwischen dem Umfang 86 der Werkzeugspindel 26 und der zweiten Axialabdichtung 106 angeordnete Ring bewirkt, dass die zweite Axialabdichtung 106 mit der Werkzeugspindel 26 rotiert und sich in der Pneumatiklagerung 126 relativ zum Gehäuse bewegt. Im Vergleich zu herkömmlichen Lösungen wird hier durch die Verlustleistung und die Erwärmung der Werkzeugspindel 26 im Betrieb entscheidend herabgesetzt. Demzufolge kann auch die Kühlung der Werkzeugspindel 26 auf geringere Kühlleistungen hin ausgelegt werden. Daneben umfasst die zweite Abdichtung 102 die ringförmig ausgebildete zweite Radialabdichtung 104. Die zweite Radialabdichtung 104 ist bevorzugt als Dichtring ausgebildet und liegt an der der Stirnseite 118 der Werkzeugspindel 26 abgewandten Begrenzungsfläche des Hohlraums 128.

Während die in Figur 4 dargestellte zweite Abdichtung 102 an der dem Werkstück zugewandten Stirnseite 118 der axial in Bezug auf die zweite Abdichtung 102 verfahrbaren Werkzeugspindel 26 aufgenommen ist, liegt die erste Abdichtung 92 auf der der Überlastsicherung 54 zuweisenden Seite und umfasst ebenfalls die Pneumatiklagerung 126 zur Herabsetzung der Verlustleistung und reibungsarmen Auslegung der Axialdichtung.

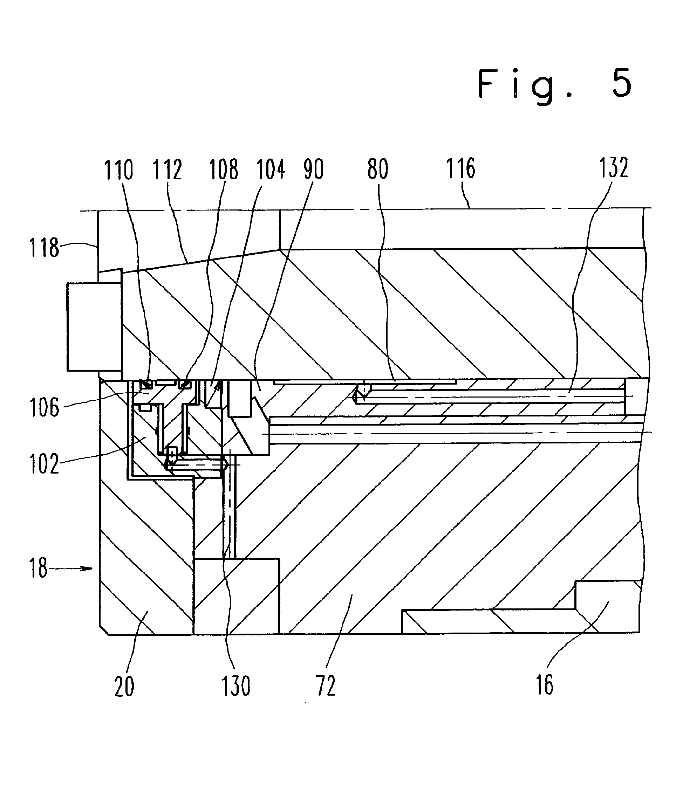

Der Darstellung gemäß Figur 5 ist ein Schnitt durch das werkstückseitige Ende der in dem Spindelschlitten geführten und aus diesem ausfahrbaren Werkzeugspindel zu entnehmen.

Aus der Darstellung gemäß Figur 5 geht hervor, dass an der Stirnseite 18 des Spindelschlittens 16 die Anschlussfläche 20 zur Aufnahme eines in Figur 5 nicht dargestellten Aggregats befestigt ist. Die Anschlussfläche 20 für das Aggregat, in welches das Bearbeitungswerkzeug für das zu bearbeitende Werkstück optional eingelassen wird, dient der Funktionalitätserweiterung der Werkzeugspindel 26. Über das Aggregat lassen sich verschiedene Bearbeitungsebenen und Bearbeitungswinkel erreichen, so dass die Aufspannposition des spanabhebend zu bearbeitenden Werkstücks relativ zur Werkzeugspindel 26 sowie relativ zum Spindelschlitten 16 nicht verändert werden muss. Ein Aggregat wird vorzugsweise dann eingesetzt, wenn die in horizontale Richtung verlaufende Verfahrbewegung sowohl der Werkzeugspindel 26 als auch des Spindelschlittens 16 nicht ausreicht, um die entsprechende Stelle oder die entsprechende Fläche des spanabhebend zu bearbeitenden Werkstücks zu erreichen.

Aus der Darstellung gemäß Figur 5 geht hervor, dass ein Druckluftanschluss 130 innerhalb der das zweite Einsatzteil 90 aufnehmenden Buchse zur zweiten Abdichtung 102 verläuft. Der Druckluftanschluss 130 gemäß der Darstellung in Figur 5 dient zur Beaufschlagung der in Figur 4 schematisch angedeuteten Pneumatiklagerung 126 der zweiten Axialabdichtung 106. Dieser in axiale Richtung vorgeschaltet befindet sich die zweite Radialabdichtung 104. Aus der Darstellung gemäß Figur 5 lässt sich überdies die Axialerstreckung der Tasche 80, die im ersten Einsatzteil 90 ausgebildet ist. Das erste Einsatzteil 90 wiederum ist von der auswechselbaren Buchse 72 umschlossen, die zum Auswechseln der Werkzeugspindel 26 gemäß der Darstellung in Figur 2 in Zielrichtung 84 aus dem in horizontale Richtung verfahrbaren Spindelschlitten 16 gezogen werden kann, sollte das Auswechseln der Werkzeugspindel 26 erforderlich sein.

Die mindestens eines Druckmitteltasche 80 im ersten Einsatzteil 90 wird über jeweils axial im ersten Einsatzteil 90 verlaufende Druckmittelbohrung 132 beaufschlagt. Das Radial-Hydrostatiklager 70 gemäß der in Figur 5 dargestellten Ausführung wird demnach durch die stationär im Spindelschlitten 16 gelagerte Buchse 72 gebildet, welche das erste Einsatzteil 90 mit der darin ausgebildeten mindestens einen Druckmitteltasche 80 umfasst. Der rotierende Teil des Radial-Hydrostatiklagers 70 wird durch den Umfang 86 der Werkzeugspindel 26 gebildet, deren werkzeugseitige Stirnseite mit Bezugszeichen 118 identifiziert ist.

### Bezugszeichenliste

- 10: Vertikal-/Horizontalschlitten
- 12: Vertikalführung
- 14: Vertikalrichtung
- 16: Spindelschlitten
- 18: Stirnseite
- 20: Anschlussfläche für Aggregat
- 22: Werkzeugaufnahme
- 24: Aggregatbefestigung
- 26: Werkzeugspindel
- 28: Horizontalverfahrbewegung Werkzeugspindel
- 30: Horizontalverfahrbewegung Spindelschlitten

- 50: Verfahrweg Spindelschlitten
- 52: Verfahrweg Werkzeugspindel
- 54: Überlastsicherung
- 56: Ring
- 58: erster Spannring
- 60: zweiter Spannring
- 62: Vorspannelement
- 64: Abtrieb Getriebe
- 66: Schrumpfsitz
- 68: Druckmittelversorgung
- 70: Radial-Hydrostatiklager (72 erstes und zweites Einsatzteil 88, 90)
- 72: Buchse (Taschenteil Radial-Hydrostatiklager 70)
- 73: Anlagefläche Buchse 72 im Spindelschlitten 16
- 74: Druckmitteltasche
- 80: Druckmitteltasche
- 86: 86 Umfang Werkzeugspindel 26
- 88: erstes Einsatzteil
- 90: 90 zweites Einsatzteil
- 92: erste Abdichtung
- 94: 94 erste Radialabdichtung
- 96: 96 erste Axialabdichtung
- 98: 98 erstes Dichtelement
- 100: 100 zweites Dichtelement
- 102: 102 zweite Abdichtung
- 104: 104 zweite Radialabdichtung
- 106: 106 zweite Axialabdichtung
- 108: 108 drittes Dichtelement
- 110: 110 viertes Dichtelement
- 112: 112 Konus
- F: F Kraft vom Werkstück auf Werkzeugspindel 26
- 114: 114 Biegelinie Werkzeugspindel 26
- 116: 116 Symmetrielinie Werkzeugspindel 26
- 118: 118 Stirnseite Werkzeugspindel 26
- 120: 120 Taschenanschrägung
- 122: 122 erste Schrägung
- 124: 124 zweite Schrägung
- 125: 125 Spaltmaß
- 126: 126 Pneumatiklagerung
- 128: 128 Hohlraum
- 130: 130 Druckluftanschluss
- 132: 132 Druckmittelbohrung

## Patentansprüche

1. Werkzeugspindel (26) für Bearbeitungszentren zur spanabhebenden Bearbeitung von Werkstücken, die ausfahrbar in einem Spindelschlitten (16) gelagert ist, wobei die Werkzeugspindel (26) in einem Radial-Hydrostatiklager (70) aufgenommen ist, das an mindestens einer Seite in Axialrichtung abgedichtet ist, **dadurch gekennzeichnet, dass** eine Abdichtung (102) vorgesehen ist, die eine reibungsarm gelagerte Axialabdichtung (106) umfasst druckluftbeaufschlagt gelagert ist und mit der Werkzeugspindel (26) mitrotiert.

2. Werkzeugspindel (26) gemäß Anspruch 1, **dadurch gekennzeichnet, dass** das Radial-Hydrostatiklager (70) zumindest auf der dem Werkstück zuweisenden Seite die Abdichtung (102) aufweist, die eine Radialdichtung und die reibungsarm gelagerte Axialabdichtung (106) mit Pneumatiklagerung (126) umfasst.

3. Werkzeugspindel (26) gemäß Anspruch 1, **dadurch gekennzeichnet, dass** das Radial-Hydrostatiklager (70) eine erste Abdichtung (92) und eine an einer Stirnseite (118) der Werkzeugspindel (26) angeordnete zweite Abdichtung (102) aufweist.

4. Werkzeugspindel (26) gemäß Anspruch 3, **dadurch gekennzeichnet, dass** die Abdichtungen (92, 102) jeweils eine erste und zweite Axialdichtung (96, 106) und jeweils eine erste und zweite Radialdichtung (94, 104) umfassen.

5. Werkzeugspindel (26) gemäß Anspruch 4, **dadurch gekennzeichnet, dass** die ersten und zweiten Axialdichtungen (96, 106) jeweils ein erstes und zweites Dichtelement (98, 100) und ein drittes und viertes Dichtelement (108, 110) umfassen, die den Umfang (86) der Werkzeugspindel (26) kontaktieren.

6. Werkzeugspindel (26) gemäß Anspruch 4, **dadurch gekennzeichnet, dass** die reibungsarm gelagerte Axialabdichtung (96, 106) am Umfang (86) der Werkzeugspindel (26) mittels eines Rings aufgenommen ist und mit der Werkzeugspindel (26) rotierend sich relativ in der Pneumatiklagerung (126) bewegt.

7. Werkzeugspindel (26) gemäß Anspruch 4, **dadurch gekennzeichnet, dass** die erste und zweite Radialdichtung (94, 104) als Dichtringe ausgeführt sind und jeweils vor einem Hohlraum (128) angeordnet sind, in dem die erste Axialdichtung (96) oder die zweite Axialdichtung (106) aufgenommen ist.

8. Werkzeugspindel (26) gemäß Anspruch 1, **dadurch gekennzeichnet, dass** eine Buchse (72) des Radial-Hydrostatiklagers (70) ein erstes Einsatzteil (88) und ein zweites Einsatzteil (90) aufweist.

9. Werkzeugspindel (26) gemäß Anspruch 1, **dadurch gekennzeichnet, dass** das Radial-Hydrostatiklager (70) mindestens zwei Druckmitteltaschen (74, 80) aufweist.

10. Werkzeugspindel (26) gemäß Anspruch 9, **dadurch gekennzeichnet, dass** die Druckmitteltaschen (74, 80) im ersten Einsatzteil (88) und im zweiten Einsatzteil (90) ausgeführt sind.

11. Werkzeugspindel (26) gemäß Anspruch 9, **dadurch gekennzeichnet, dass** die Druckmitteltaschen (74, 80) den Umfang (86) der Werkzeugspindel (26) in einer Axiallänge umschließen.

12. Werkzeugspindel (26) gemäß Anspruch 9, **dadurch gekennzeichnet, dass** eine Druckmittelversorgung (68) in einen Hohlraum (82) der Buchse (72) mündet und Druckmittelbohrungen (132) durch die Einsatzteile (88, 90) zu den Druckmitteltaschen (74, 80) verlaufen.

13. Werkzeugspindel (26) gemäß Anspruch 1, **dadurch gekennzeichnet, dass** die Druckmitteltaschen (74, 80) von Stegen begrenzt sind, die an ihren dem Umfang (86) der Werkzeugspindel (26) zuweisenden Seiten Taschenanschrägungen (120) aufweisen.

14. Werkzeugspindel (26) gemäß Anspruch 13, **dadurch gekennzeichnet, dass** die Taschenanschrägungen (120) eine erste Schrägung (122) oder eine zweite Schrägung (124) aufweisen.

15. Werkzeugspindel (26) gemäß Anspruch 1, **dadurch gekennzeichnet, dass** die Buchse (72) in der Werkzeugspindel (26) in einer Anlagefläche (73) geführt ist und in Ziehrichtung (84) von einer Stirnseite (118) her aus der Werkzeugspindel (26) ziehbar ist.
